# EUROPEAN PATENT SPECIFICATION

(11) **EP 4 399 248 B1**
(45) Date of publication and mention of the grant of the patent: **29.07.2026**
(21) Application number: 22773520.6
(22) Date of filing: 07.09.2022
(51) Int. Cl.: C09D 11/03, C09D 11/103, C08F 222/10, C09D 4/06, C09D 7/00, C09D 11/101, C09D 7/61, C09D 7/63

(54) **STABILIZATION OF PIGMENTED (METH)ACRYLATE-BASED COMPOSITIONS**
STABILISIERUNG VON PIGMENTIERTEN (METH)ACRYLAT-BASIERTEN ZUSAMMENSETZUNGEN
STABILISATION DES COMPOSITIONS PIGMENTÉES À BASE DE (MÉTH)ACRYLATE

(30) Priority: 07.09.2021 EP 21195322
(43) Date of publication of application: 17.07.2024
(73) Proprietor: Sika Technology AG, 6340 Baar (CH)
(72) Inventor: WALTHER, Burkhard, 26123 Oldenburg (DE); BRUCHERTSEIFER, Christian, 26123 Oldenburg (DE)
(74) Representative: Sika Patent Attorneys
(86) International application number: PCT/EP2022/074891
(87) International publication number: WO 2023/036837

(56) References cited:
- EP-A1- 2 692 803
- US-A1- 2014 370 248

## Description

The present invention relates to shelf-stable, pigmented monomeric (meth)acrylate-based compositions comprising a stabilizer selected from sterically hindered aminoxyl radical compounds, and a urea-aldehyde resin. Moreover, the present invention relates to a process for the stabilization of pigmented monomeric (meth)acrylate-based compositions and to the use of sterically hindered aminoxyl radical compounds for the stabilization of pigmented monomeric (meth)acrylate-based compositions in the presence of a urea-aldehyde resin.

Construction systems based on reactive monomers, such as (meth)acrylates, are used in a broad range of different flooring and waterproofing applications. Materials need to be colored, preferably by using color pigments. Some color pigments are especially difficult to stabilize in a (meth)acrylate carrier system. Especially in the case of pigmented preparations based on iron oxide pigments (black or red) and Naphthol AS, those preparations quickly turn solid already at room temperature. There existed a need for sufficient stabilization to obtain a shelf-stable, pigmented (meth)acrylate-based composition.

EP 3 053 974 A1 discloses (Abstract) a pigment dispersion composition containing a pigment, a polymerizable compound, and a compound having a structural unit represented by Formula (A), a structural unit represented by Formula (B), a structural unit represented by Formula (C) derived from polyalkylene oxide having a number average molecular weight of equal to or greater than 300 and less than 5,000, and a structural unit represented by Formula (D), in which a mass ratio [(B)/(C)] is 20/80 to 60/40.

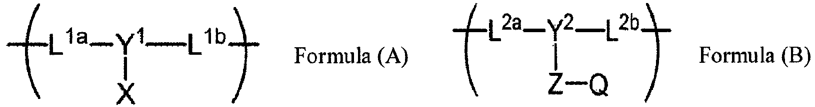

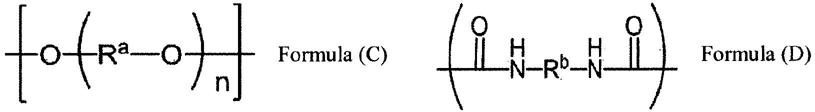

Since Q represents a group derived from poly(meth)acrylate having a glass transition temperature of equal to or higher than 50°C, said compound represents a polymeric (meth)acrylate compound.

WO 01/42312 A1 discloses (Abstract) a composition comprising: a1) at least one oligomer, co-oligomer, polymer or copolymer or a mixture thereof having at least one ethylenically unsaturated bond; or a2) a mixture of at least one ethylenically unsaturated monomer with at least one oligomer, co-oligomer, polymer or copolymer having at least one ethylenically unsaturated bond; and b) at least one stable sterically hindered nitroxyl free-radical or at least one compound of the benzofuran-2-one type or a mixture of the two compounds. The invention relates also to a method of stabilizing ethylenically unsaturated monomers, oligomers, co-oligomers, polymers or copolymers, and to the use of a stable sterically hindered nitroxyl free-radical or a compound of the benzofuran-2-one type in preventing polymerization or crosslinking. The composition may also contain as additional additives dyes and/or white or colored pigments.

In WO 01/42312 A1, a composition of at least one oligomer, co-oligomer, polymer or co-polymer or a mixture thereof is described with at least one ethylenically unsaturated bond. Stabilization of monomeric (meth)acrylates alone is not described.

Color pigments are advantageously formulated together with urea-aldehyde resins, especially with urea-formaldehyde resins. Such resins improve the wetting of the pigments as well as their dispersibility, resulting in better end properties such as opacity, gloss, coverage, etc. Moreover, the settling stability of the components in the color paste is also improved.

Initial trials based on a prototype liquid carrier (a mixture of a urea-aldehyde resin with triethylene glycol dimethacrylate, TEGDMA) showed that ordinary (meth)acrylate stabilization was not sufficient. Especially in the case of pigment preparations based on "Oxide Black 318" (Fe₂O₃), Naphthol AS (an organic azo dye) as well as "Oxide Red" (Fe₂O₃), those preparations turned solid already at room temperature (23°C). Therefore, storage stability without special stabilization is poor.

There existed a need for the stabilization of monomeric (meth)acrylates in the presence of pigments (black, white, colored), even at elevated temperatures, to obtain shelf-stable, pigmented (meth)acrylate-based compositions. The stabilization of purely monomeric (meth)acrylates in the presence of pigments is more difficult than the stabilization of oligomer- or polymer-diluted (meth)-acrylates due to the much higher concentration of polymerizable double bonds.

The before-mentioned technical problem is solved by the features of the independent claims. The dependent claims relate to preferred embodiments.

As will be shown in the experimental section, (meth)acrylates with color pigments have low viscosities but polymerize fast, especially at elevated temperatures. Urea-aldehyde resins increase the viscosities of such formulations and accelerate polymerization, especially at elevated temperatures. It was surprisingly found that the stabilization of (meth)acrylates with color pigments and urea-aldehyde resins could be achieved by the use of sterically hindered aminoxyl radical compounds alone.

In trials with a solution of 4-Hydroxy-TEMPO in methacrylic monomers such as TEGDMA added to the pigment paste containing the pigment and the urea-aldehyde resin, it was found that these preparations remained liquid and stable in viscosity. Stability was proven for storage at room temperature as well as storage at elevated temperatures over longer periods of time (at least 6 weeks, preferably at least 7 weeks, more preferably at least 8 weeks, e.g. at least 3 months, at least 6 months, and in particular at least 12 months). Thus, the term "shelf-stable" within the meaning of the present invention denotes a stability of the compositions or preparations of the invention which allows for a shelf life or storage time of at least 6 weeks, preferably at least 7 weeks, more preferably at least 8 weeks, e.g. at least 3 months, at least 6 months, and in particular at least 12 months. A stabilized liquid carrier system based on a urea-aldehyde resin mixed with TEGDMA was made. The stabilizer was present at different concentrations. There was no need for further addition of any other stabilizer.

According to a first aspect of the invention, the present invention provides a shelf-stable, pigmented (meth)acrylate-based composition comprising at least one polymerizable monomeric (meth)-acrylate coumpound, at least one pigment, and at least one stabilizer selected from sterically hindered aminoxyl radical compounds. The composition further contains at least one urea-aldehyde resin. More preferably, the urea-aldehyde resin is a urea-formaldehyde polycondensation product.

For the purposes of the present invention, the term "comprising" is intended to include the narrower term "consisting of", but not to be synonymous therewith. It is moreover intended that in each actual case the sum of all of the percentages of the specified and unspecified constituents of the formulation of the invention is always 100%. Moreover, process steps may be conducted in any order or sequence. Preferably, however, the steps are to be carried out in the order indicated.

The term "polymerizable monomeric (meth)acrylate compound" excludes oligomeric and/or polymeric (meth)acrylate compounds regardless of whether they still contain polymerizable double bonds. Such compounds should not be present in the composition of the invention.

The polymerizable monomeric (meth)acrylate contains at least one ethylenically unsaturated double bond. It may however contain more than one ethylenically polymerizable double bonds. It is preferred that the (meth)acrylate contains one to four (meth)acrylate moieties in the molecule, for example one (meth)acrylate moiety in the molecule, two (meth)acrylate moieties in the molecule, three (meth)acrylate moieties in the molecule or four (meth)acrylate moieties in the molecule, wherein two to four (meth)acrylate moieties are particularly suitable for a better crosslinking. These moieties can be bound, for instance, to a (straight chain or branched) polyether polyol or polyester polyol backbone via an ester bond between the carboxylic group of the (meth)acrylate and an OH-group of the respective alcohol.

A preferred (meth)acrylate is the triethylene glycol dimethacrylate (TEGDMA) due to several reasons. It is non-toxic, relatively cheap, not highly volatile and thus not excessively smelly and highly compatible with the other constituents of the composition of the invention. Moreover, it exhibits low viscosity.

The term "(meth)acrylate" as used throughout the present specification is meant to include both acrylates and methacrylates.

The composition of the invention should contain pigments which are selected from inorganic pigments, organic pigments and mixtures thereof, namely baryte, titanium dioxide, chromium (III) oxide, iron (III) oxide, copper (II) phthalocyanine, carbon black, bismuth vanadate, Naphthol AS-pigments, and mixtures thereof.

The stabilizer according to the invention should be selected from compounds having the following structural features: 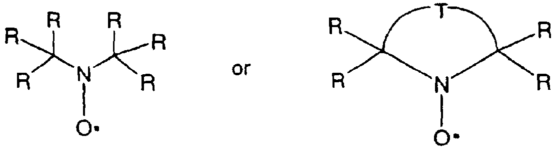 wherein R is alkyl and T is a group required to complete a 5- or 6-membered ring. R is preferably a C₁₋₄ alkyl, more preferably methyl, when the stabilizer is a cyclic nitroxyl radical. The most preferred choices are 1-oxy-2,2,6,6-tetramethylpiperidine (TEMPO) and 4-hydroxy-1-oxy-2,2,6,6-tetramethylpiperidine (4-OH-TEMPO), and mixtures thereof. The stabilizer should generally be used in amounts of 0.01 to 5.0% by weight. 4-OH-TEMPO has the advantage that it smells less than TEMPO.

Generally the composition of the invention should comprise about 10 - 35% by weight of the polymerizable monomeric (meth)acrylate, 0.01 - 5.0%, preferably 0.05 - 2.0%, and in particular 0.075 - 1.0% by weight of the sterically hindered aminoxyl radical compound, about 10 - 35% by weight of the urea-aldehyde resin, and about 4 - 80% by weight, preferably 10 - 50% by weight of the pigment. In the case of carbon black, about 4% by weight of pigment is sufficient while in the case of TiO₂, up to 80% by weight of pigment are possible.

According to a second aspect of the invention, the present invention provides a process for the stabilization of pigmented (meth)acrylate-based compositions, comprising the steps of providing at least one polymerizable monomeric (meth)acrylate, adding a urea-aldehyde resin, adding from 0.05 to 5.0% by weight of a sterically hindered aminoxyl radical compound, dispersing in the obtained mixture a pigment, and optionally adding and/or dispersing further additives.

According to a third aspect of the invention, the present invention provides the use of sterically hindered aminoxyl radical compounds for the stabilization of pigmented monomeric (meth)acrylate-based compositions in the presence of a urea-aldehyde resin.

The present invention will now be illustrated in further detail by means of the following non-limiting examples.

### EXAMPLES

### Example 1: (Basic Mix Design)

Preparation of a Laropal^{®} A 81 solution: 49.5 g of triethylene glycol dimethacrylate (TEGDMA - Sartomer^{®} SR205H, Arkema Group) was provided, 0.5 g of 4-hydroxy-1-oxy-2,2,6,6-tetramethylpiperidine (4-OH-TEMPO, Lignostab^{®} 1198, BASF SE) was added, and 50.0 g of Laropal^{®} A 81 (urea-aldehyde resin, BASF SE) was added. The mixture was stirred for 4-6 hours until completely mixed. A stabilized monomer solution was obtained.

25 g of the Laropal^{®} A 81 solution was taken, 5 g of Disperbyk^{®} 110 (a phosphoric acid-containing dispersing and wetting additive, BYK-Chemie GmbH) was added under stirring and 70 g of titanium dioxide pigment (Tioxide TR 92, HUNTSMAN) was dispersed in the mixture. This pigmented paste exhibited satisfactory stability, even for prolonged times at elevated temperatures.

### Example 2:

Example 1 was repeated with 50.0 g of triethylene glycol dimethacrylate (TEGDMA - Sartomer^{®} SR205H, Arkema Group) and 50.0 g of Laropal^{®} A 81 (aldehyde resin, BASF SE). An unstabilized monomer solution was obtained.

54 g of this solution was taken, 5 g of Disperbyk^{®} 110 (a phosphoric acid-containing dispersing and wetting additive, BYK-Chemie GmbH) was added under stirring and 20 g of Novoperm Red^{®} F2RK70 (Naphthol AS-pigment, red, Clariant) and 21 g of Portaryte^{®} B15 (BaSO₄, Sibelco) were dispersed in the mixture.

In four different batches, 0 g, 0.75 g, 0.38 g and 0.075 g of 4-hydroxy-1-oxy-2,2,6,6-tetramethylpiperidine (4-OH-TEMPO, Lignostab^{®} 1198, BASF SE) was added (as a solution). Viscosities of the mixtures obtained were measured after storage of the mixtures for the periods of time and at the temperatures as indicated in Table 1 below in regular intervals with a "Modular Compact Rheometer MCR 302" (Anton Paar). The results are given in Table 1 below.

**Table 1**

| **Lignostab^{®}** | **0 g (compar.)** | **0.76 g** | **0.38 g** | **0.075 g** |
|---|---|---|---|---|
| Viscosity 0 h | 6910 mPa s | 6080 mPa s | 6187 mPa s | 5782 mPa s |
| Viscosity 24 h | RT: liquid | RT: 5973 mPa s | RT: 6345 mPa s | RT: 5979 mPa s |
| | 50°C: solid | 50°C: 5876 mPa s | 50°C: 6000 mPa s | 50°C: 5723 mPa s |
| Viscosity 3 d | | RT: 6004 mPa s | RT: 6378 mPa s | RT: 5829 mPa s |
| | | 50°C: 5673 mPa s | 50°C: 6135 mPa s | 50°C: 5917 mPa s |
| Viscosity 7 d | | RT: 6661 mPa s | RT: 7290 mPa s | RT: 6640 mPa s |
| | | 50°C: 6990 mPa s | 50°C: 7480 mPa s | 50°C: 6720 mPa s |
| Viscosity 14 d | | RT: 5877 mPa s | RT: 6345 mPa s | RT: 5861 mPa s |
| | | 50°C: 6378 mPa s | 50°C: 6622 mPa s | 50°C: 6575 mPa s |
| Viscosity 21 d | | RT: 6420 mPa s | RT: 6418 mPa s | RT: 5892 mPa s |
| | | 50°C: 6511 mPa s | 50°C: 6964 mPa s | 50°C: 6259 mPa s |
| Viscosity 28 d | RT: liquid | RT: 6821 mPa s | RT: 6497 mPa s | RT: 5923 mPa s |
| | | 50°C: 6899 mPa s | 50°C: 7214 mPa s | 50°C: 6400 mPa s |
| Viscosity 42 d | | RT: 5880 mPa s | RT: 6365 mPa s | RT: 5733 mPa s |
| | | 50°C: 6700 mPa s | 50°C: 7128 mPa s | 50°C: 6700 mPa s |
| Viscosity 56 d | | RT: 5964 mPa s | RT: 6499 mPa s | RT: 5806 mPa s |
| | | 50°C: 6934 mPa s | 50°C: 7169 mPa s | 50°C: 6954 mPa s |

In all tables, "RT" means room temperature, "h" means hours(s) and "d" means day(s). Table 1 indicates that the unstabilized mixture with color pigment solidified at 50°C during only 24 hours while stabilized mixtures kept liquid at 50°C for 56 days with as little as 0.075% of stabilizer.

### Example 3:

Example 2 was repeated with 48.50 g of the unstabilized solution, 5 g of Disperbyk^{®} 110 (a phosphoric acid-containing dispersing and wetting additive, BYK-Chemie GmbH) and 50.2 g of Bayferrox^{®} 3920 (Fe₂O₃ pigment, yellow, LANXESS Deutschland GmbH). In four different batches, 0 g, 0.75 g, 0.38 g and 0.075 g of 4-hydroxy-1-oxy-2,2,6,6-tetramethylpiperidine (4-OH-TEMPO, Lignostab^{®} 1198, BASF SE) was added (as a solution). Viscosities were measured in regular intervals as mentioned above. The results are given in Table 2 below.

**Table 2**

| **Lignostab**^{®} | **0 g (compar.)** | **0.75 g** | **0.38 g** | **0.075 g** |
|---|---|---|---|---|
| Viscosity 0 h | 6200 mPa s | 6651 mPa s | 6919 mPa s | 6777 mPa s |
| Viscosity 24 h | | RT: 6708 mPa s | RT: 7358 mPa s | RT: 7592 mPa s |
| | | 50°C: 5698 mPa s | 50°C: 6029 mPa s | 50°C: 6519 mPa s |
| Viscosity 3 d | | RT: 6705 mPa s | RT: 7025 mPa s | RT: 7457 mPa s |
| | | 50°C: 5415 mPa s | 50°C: 5953 mPa s | 50°C: 6210 mPa s |
| Viscosity 7 d | RT: liquid | RT: 7620 mPa s | RT: 7940 mPa s | RT: 8320 mPa s |
| | 50°C: solid (4d) | 50°C: 5830 mPa s | 50°C: 6010 mPa s | 50°C: 6820 mPa s |
| Viscosity 14 d | | RT: 5981 mPa s | RT: 6901 mPa s | RT: 7092 mPa s |
| | | 50°C: 5518 mPa s | 50°C: 5859 mPa s | 50°C: 6428 mPa s |
| Viscosity 21 d | | RT: 6236 mPa s | RT: 6952 mPa s | RT: 6906 mPa s |
| | | 50°C: 5908 mPa s | 50°C: 6376 mPa s | 50°C: 6954 mPa s |
| Viscosity 28 d | RT : liquid | RT: 6398 mPa s | RT: 7117 mPa s | RT: 7039 mPa s |
| | | 50°C: 6222 mPa s | 50°C: 6478 mPa s | 50°C: 7216 mPa s |
| Viscosity 42 d | | RT: 6193 mPa s | RT: 6527 mPa s | RT: 6768 mPa s |
| | | 50°C: 8068 mPa s | 50°C: 8362 mPa s | 50°C: 9233 mPa s |
| Viscosity 56 d | | RT: 6287 mPa s | RT: 6638 mPa s | RT: 7299 mPa s |
| | | 50°C: 8623 mPa s | 50°C: 8964 mPa s | 50°C: 10490 mPa s |

Table 2 indicates that the unstabilized mixture with color pigment solidified at 50°C during 7 days while stabilized mixtures kept liquid at 50°C for 56 days with as little as 0.075% of stabilizer.

### Example 4:

Example 2 was repeated with varying color pigments with and without stabilizer (4-OH-TEMPO). Viscosities were measured in regular intervals as mentioned above. The results are given in Table 3 below.

Table 3 hereinbelow indicates that the stabilized mixtures with the individual color pigments exhibited much better long-term stabilities than the unstabilized mixtures - even at elevated temperatures. Moreover, the stabilized mixtures exhibited very satisfactory overall stabilities in absolute terms.

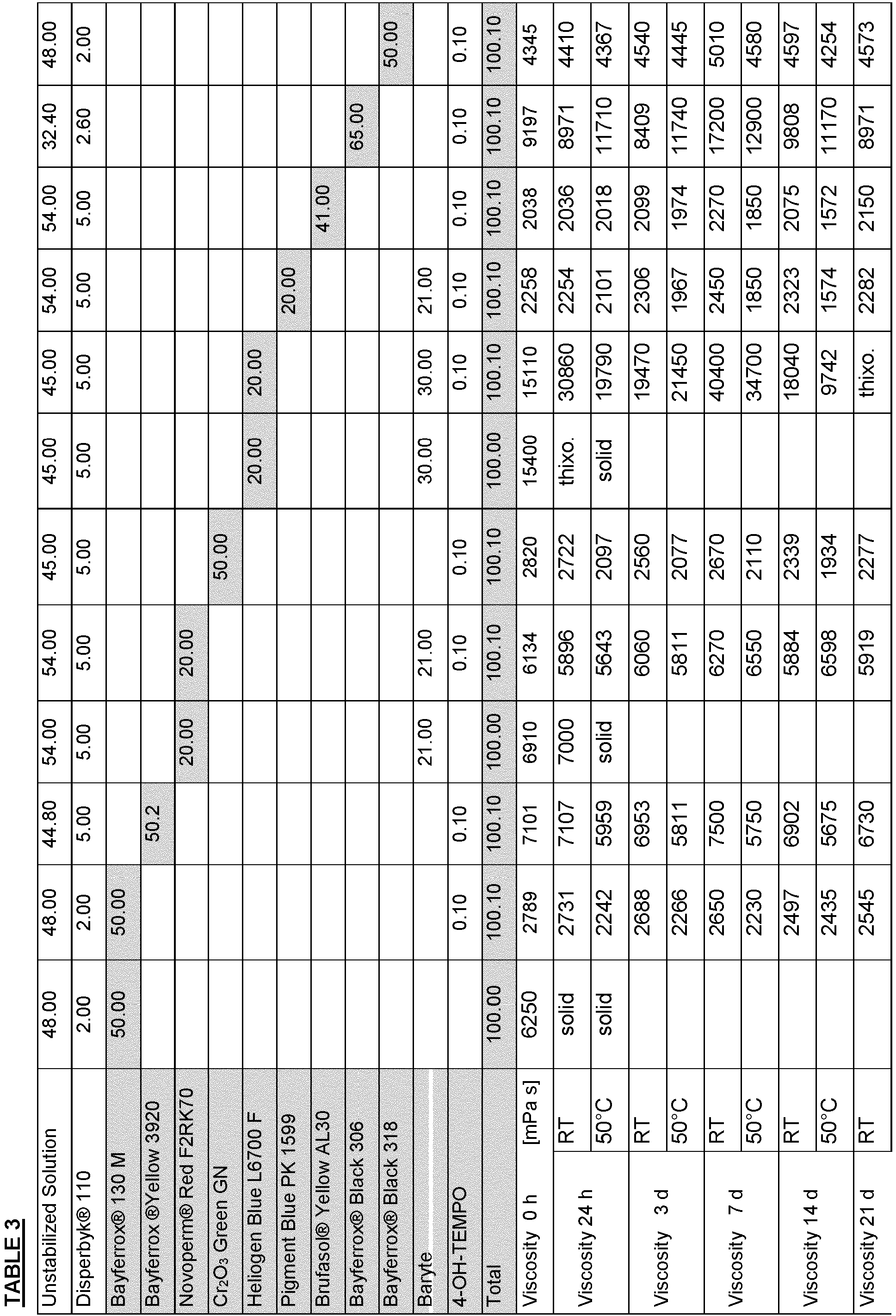

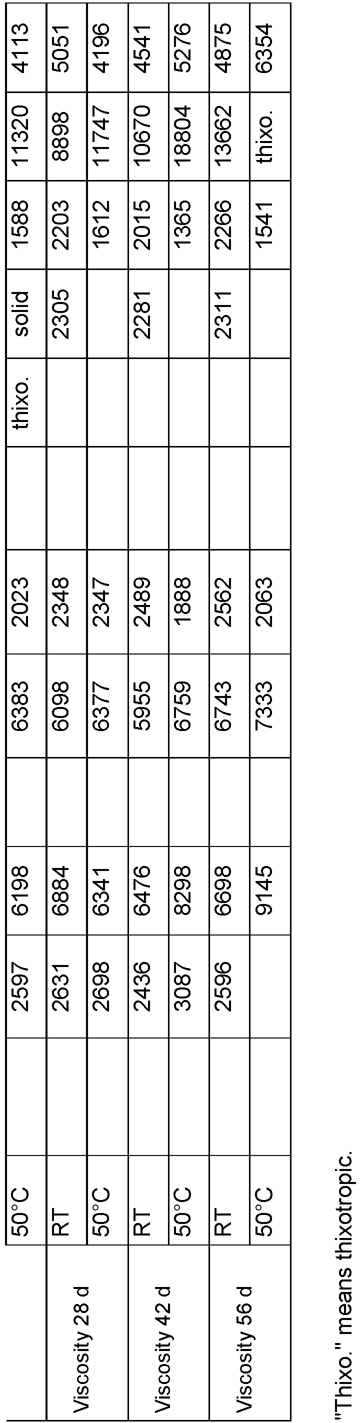

### Example 5:

Example 1 was repeated with 50.0 g of triethylene glycol dimethacrylate (TEGDMA - Sartomer^{®} SR205H, Arkema Group) and 50.0 g of Bayferrox^{®} 130 M (micronized Fe₂O₃ pigment, red, LANXESS Deutschland GmbH) without other additives. The results are given in Table 4 (Run V1). Run V-1 was repeated with 25.0 g of TEGDMA, 50.0 g of Bayferrox^{®} 130 M, and 25.0 g of Laropal^{®} A 81 (urea-aldehyde resin, BASF SE) without stabilizer. The results are given in Table 4 (Run V2). Run V-2 was repeated with 24.75 g of TEGDMA, 50.0 g of Bayferrox^{®} 130 M, 24.75 g of Laropal^{®} A 81 and 0.50 g of 4-hydroxy-1-oxy-2,2,6,6-tetramethylpiperidine (4-OH-TEMPO, Lignostab^{®} 1198, BASF SE). The results are given in Table 4 (Run V3).

**Table 4**

| | **V1** (comparative) | **V2** (comparative) | **V3** (inventive) |
|---|---|---|---|
| Viscosity 0 h | 322 mPa s | 5244 mPa s | 3964 mPa s |
| Viscosity 1 h | RT: 275 mPa s | RT: 5274 mPa s | RT: 3829 mPa s |
| | 50°C: 191 mPa s | 50°C: 4760 mPa s | 50°C: 3643 mPa s |
| Viscosity 2 h | RT: 281 mPa s | RT: 5210 mPa s | RT: 3964 mPa s |
| Viscosity 3 h | RT: 283 mPa s | RT: 5117 mPa s | RT: 4003 mPa s |
| | 50°C: 211 mPa s | 50°C: 4877 mPa s | 50°C: 3680 mPa s |
| Viscosity 4 h | RT: 294 mPa s | RT: 5196 mPa s | RT: 4010 mPa s |
| Viscosity 5 h | RT: 266 mPa s | RT: 5189 mPa s | RT: 4000 mPa s |
| Viscosity 6 h | RT: 251 mPa s | RT: 5192 mPa s | RT: 3966 mPa s |
| Viscosity 7 h | RT: 279 mPa s | RT: 5117 mPa s | RT: 3918 mPa s |
| | 50°C: 200 mPa s | 50°C: 4675 mPa s | 50°C: 3399 mPa s |
| Viscosity 24 h | RT: 245 mPa s | RT: 5158 mPa s | RT: 3959mPa s |
| | 50°C: 241 mPa s | 50°C: solidified | 50°C: 3243 mPa s |
| Viscosity 2 d | RT: 277 mPa s | RT: 4906 mPa s | RT: 3657 mPa s |
| | 50°C: 253 mPa s | | 50°C: 2981 mPa s |
| Viscosity 3 d | RT: 263 mPa s | RT: 4985 mPa s | RT: 3759 mPa s |
| | 50°C: 362 mPa s | | 50°C: 3065 mPa s |
| Viscosity 6 d | RT: 188 mPa s | RT: 5011 mPa s | RT: 3954 mPa s |
| | 50°C: 169 mPa s | | 50°C: 2949 mPa s |
| Viscosity 7 d | RT: 168 mPa s | RT: 5126 mPa s | RT: 3966 mPa s |
| | 50°C: 147 mPa s | | 50°C: 2939 mPa s |
| Viscosity 10 d | RT: 172 mPa s | RT: 5326 mPa s | RT: 3941 mPa s |
| | 50°C: 141 mPa s | | 50°C: 2844 mPa s |
| Viscosity 14 d | RT: 372 mPa s | RT: 4936 mPa s | RT: 3761 mPa s |
| | 50°C: 11270 mPa s | | 50°C: 2769 mPa s |
| Viscosity 21 d | RT: 412 mPa s | RT: 4970 mPa s | RT: 3901 mPa s |
| | 50°C: solidified | | 50°C: 2825 mPa s |
| Viscosity 28 d | RT: 522 mPa s | RT: 5027 mPa s | RT: 4036 mPa s |
| | | | 50°C: 2866 mPa s |
| Viscosity 42 d | RT: 642 mPa s | RT: 5104 mPa s | RT: 4331 mPa s |
| | | | 50°C: 2978 mPa s |
| Viscosity 49 d | RT: 711 mPa s | RT: 4916 mPa s | RT: 3725 mPa s |
| | | | 50°C: 2652 mPa s |

Table 4 indicates that the unstabilized mixture without urea-aldehyde resin solidified at 50°C after 14 days. The unstabilized mixture with urea-aldehyde resin was more viscous and solidified already after 24 hours, while the stabilized mixture with urea-aldehyde resin did not solidify at all but remained stable at room temperature and 50°C for at least 49 days.

### Example 6:

Example 4 was repeated with different color pigments. The results are shown in Table 5 below.

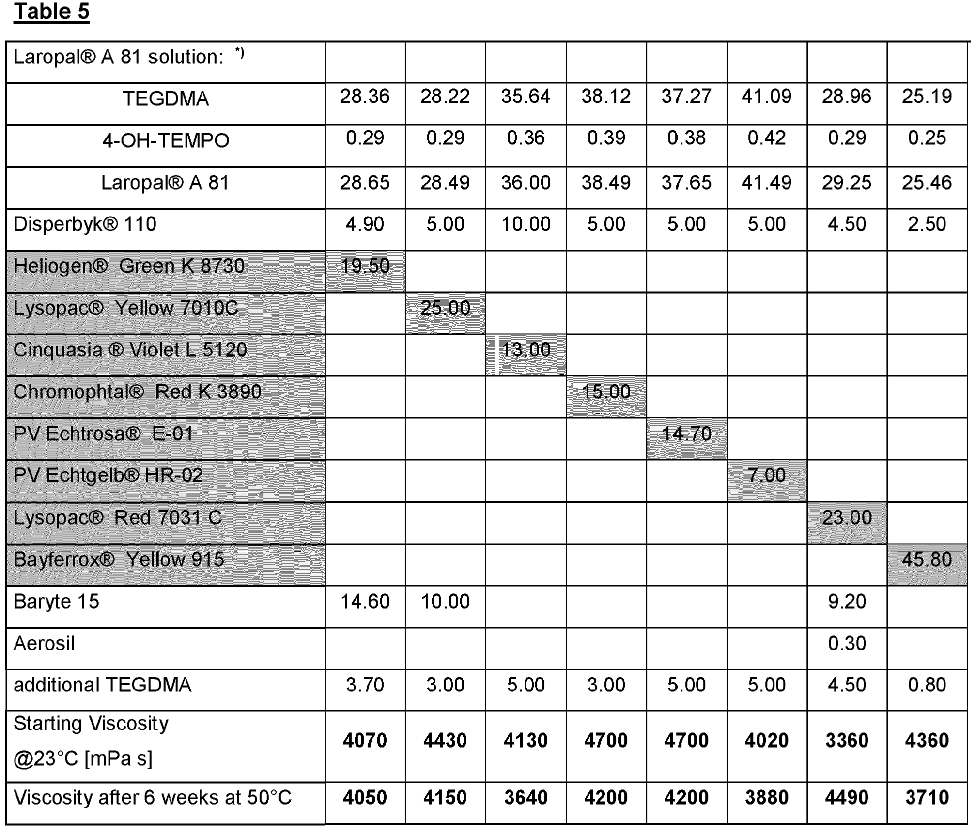

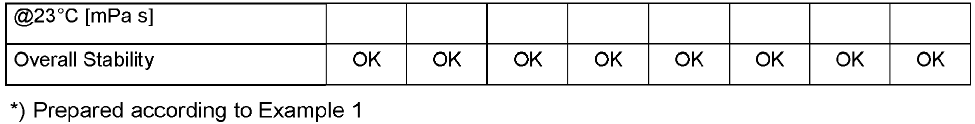

With all color pigments satisfactory viscosities and long term stabilities at elevated temperatures could be achieved.

### Example 7: (Different Methacrylates, Different Stabilizer)

A Laropal^{®} A 81 solution was produced according to Example 1 (Table 5, Run V1).

An analogous solution was prepared with trimethylolpropane trimethacrylate (TMPTMA - Sartomer^{®} 350D, Arkema Group) instead of TEGDMA (Table 5, Run V2).

Another analogous solution was prepared with methoxy polyethylene glycol 350 methacrylate (MPEG350MA - Sartomer^{®} SR 550, Arkema Group) instead of TEGDMA (Table 5, Run V3).

Yet another analogous solution was prepared according to Example 1 with TEMPO instead of 4-OH-TEMPO (Table 5, Run V4)

For each run, a color paste was prepared from 45.5 g of the Laropal^{®} A 81 solution or the other analogous solutions, 2.50 g of Disperbyk^{®} 110 (a phosphoric acid-containing dispersing and wetting additive, BYK-Chemie GmbH) and 50.5 g of Bayferrox^{®} 130 M (micronized Fe₂O₃ pigment, red, LANXESS Deutschland GmbH) plus 1.00 g of Sartomer SR 205H (TEGDMA, diluent). Viscosities of the mixtures obtained were measured after storage of the mixtures for the periods of time and at the temperatures as indicated in Table 7 below in regular intervals with a "Modular Compact Rheometer MCR 302" (Anton Paar). The results are given in Table 7 below.

**Table 7**

| | **V1** | **V2** | **V3** | **V4** |
|---|---|---|---|---|
| Viscosity 0 h | 3620 mPa s | 33.770 mPa s | 8581 mPa s | 4245 mPa s |
| Viscosity 7 d | RT: 3490 mPa s | RT: 34.350 mPa s | RT: 8560 mPa s | RT: 4114 mPa s |
| | 50°C: 2717 mPa s | 50°C: 28.860 mPa s | 50°C: 5559 mPa s | 50°C: 3107 mPa s |
| Viscosity 14 d | RT: 3352 mPa s | RT: 34.070 mPa s | RT: 7681 mPa s | RT: 4028 mPa s |
| | 50°C: 2680 mPa s | 50°C: 28.040 mPa s | 50°C: 5497 mPa s | 50°C: 2947 mPa s |
| Viscosity 21 d | RT: 3412 mPa s | RT: 34.190 mPa s | RT: 8115 mPa s | RT: 4224 mPa s |
| | 50°C: 2676 mPa s | 50°C: 29.120 mPa s | 50°C: 5412 mPa s | 50°C: 3162 mPa s |
| Viscosity 28 d | RT: 3496 mPa s | RT: 34.310 mPa s | RT: 8284 mPa s | RT: 4312 mPa s |
| | 50°C: 2668 mPa s | 50°C: 29.740 mPa s | 50°C: 5366 mPa s | 50°C: 3197 mPa s |
| Viscosity 42 d | RT: 3512 mPa s | RT: 34.890 mPa s | RT: 8368 mPa s | RT: 4388 mPa s |
| | 50°C: 2682 mPa s | 50°C: 30.440 mPa s | 50°C: 5321 mPa s | 50°C: 3209 mPa s |
| Viscosity 49 d | RT: 3292 mPa s | RT: 34.260 mPa s | RT: 7793 mPa s | RT: 4008 mPa s |
| | 50°C: 2566 mPa s | 50°C: 30.470 mPa s | 50°C: 5348 mPa s | 50°C: 3147 mPa s |

Table 7 indicates that viscosities were essentially maintained in the case of TEGDMA and TMPTMA, and even decreased in the case of MPEG350MA. TEMPO is about as effective as 4-OH-TEMPO. The individual runs were repeated with Bayferrox^{®} 306 (Fe₂O₃ pigment, yellow, LANXESS Deutschland GmbH) with essentially identical results.

## Claims

1. A shelf-stable, pigmented (meth)acrylate-based composition comprising:
- at least one polymerizable monomeric (meth)acrylate,
- at least one pigment,
- at least one stabilizer selected from sterically hindered aminoxyl radical compounds, and
- at least one urea-aldehyde resin.

2. The composition of claim 1, wherein the at least one urea-aldehyde resin is a urea-formaldehyde polycondensation product.

3. The composition of claim 1 or 2, wherein the polymerizable (meth)acrylate is selected from methacrylates containing one to four (meth)acrylate moieties in the molecule, and is preferably triethylene glycol dimethacrylate (TEGDMA).

4. The composition of any one of claims 1 - 3, wherein the pigment is selected from inorganic pigments, organic pigments and mixtures thereof.

5. The composition of any one of claims 1 - 4, wherein the pigment is selected from baryte, titanium dioxide, chromium (III) oxide, iron (III) oxide, copper (II) phthalocyanine, carbon black, bismuth vanadate, Naphthol AS, and mixtures thereof.

6. The composition of any one of claims 1 - 5, wherein the stabilizer is selected from compounds having the following formulas (I) or (II): 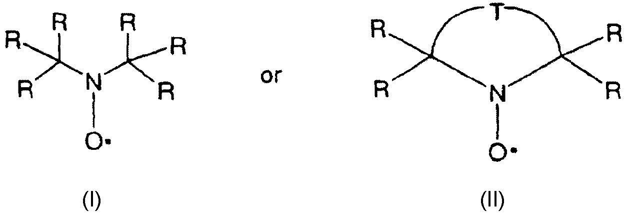 wherein R is alkyl and T is a group required to complete a 5- or 6-membered aliphatic ring.

7. The composition of claim 6, wherein R is C₁₋₄ alkyl, preferably R is methyl and the stabilizer is a compound of formula (II).

8. The composition of any one of claims 1 - 7, wherein the stabilizer is selected from 1-oxy-2,2,6,6-tetramethylpiperidine (TEMPO) and 4-hydroxy-1-oxy-2,2,6,6-tetramethylpiperidine (4-OH-TEMPO).

9. The composition of any one of claims 1 - 8, comprising
- about 10 - 35% by weight of the polymerizable monomeric (meth)acrylate,
- 0.01 - 5.0% by weight of the sterically hindered aminoxyl radical compound,
- about 10 - 35% by weight of the urea-aldehyde resin, and
- about 4 - 80% by weight of the pigment,
in each case based on the total weight of the composition.

10. A process for the stabilization of a pigmented (meth)acrylate-based composition, comprising the steps of
- providing at least one polymerizable monomeric (meth)acrylate,
- adding a urea-aldehyde resin,
- adding from 0.05 to 5.0% by weight of a sterically hindered aminoxyl radical compound, based on the total weight of the composition, and
- dispersing a pigment in the mixture obtained, and optionally
- adding further additives.

11. Use of sterically hindered aminoxyl radical compounds for the stabilization of a pigmented composition based on at least one polymerizable monomeric (meth)acrylate in the presence of a urea-aldehyde resin.

## Patentansprüche

1. Lagerstabile pigmentierte Zusammensetzung auf (Meth)acrylatbasis umfassend:
- wenigstens ein polymerisierbares monomeres (Meth)acrylat,
- wenigstens ein Pigment,
- wenigstens einen Stabilisator ausgewählt aus sterisch gehinderten Aminoxylradikalverbindungen, und
- wenigstens ein Harnstoff-Aldehyd-Harz.

2. Zusammensetzung nach Anspruch 1, wobei das wenigstens eine Harnstoff-Aldehyd-Harz ein Harnstoff-Formaldehyd-Polykondensationsprodukt ist.

3. Zusammensetzung nach Anspruch 1 oder 2, wobei das polymerisierbare (Meth)acrylat ausgewählt ist aus Methacrylaten, die ein bis vier (Meth)acrylateinheiten im Molekül enthalten, und vorzugsweise Triethylenglycoldimethacrylat (TEGDMA) ist.

4. Zusammensetzung nach einem der Ansprüche 1-3, wobei das Pigment ausgewählt ist aus anorganischen Pigmenten, organischen Pigmenten und Gemischen davon.

5. Zusammensetzung nach einem der Ansprüche 1-4, wobei das Pigment ausgewählt ist aus Baryt, Titandioxid, Chrom(III)-oxid, Eisen(III)-oxid, Kupfer(II)-phthalocyanin, Ruß, Wismutvanadat, Naphthol AS und Gemischen davon.

6. Zusammensetzung nach einem der Ansprüche 1-5, wobei der Stabilisator ausgewählt ist aus Verbindungen mit den folgenden Formeln (I) oder (II): 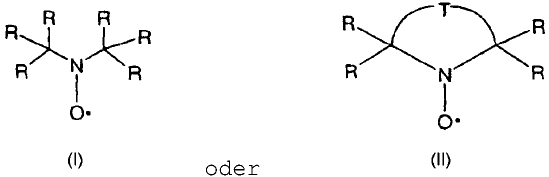 wobei R Alkyl ist und T eine Gruppe ist, die erforderlich ist, um einen 5- oder 6-gliedrigen aliphatischen Ring zu vervollständigen.

7. Zusammensetzung nach Anspruch 6, wobei R C₁₋₄-Alkyl ist, vorzugsweise R Methyl ist und der Stabilisator eine Verbindung der Formel (II) ist.

8. Zusammensetzung nach einem der Ansprüche 1-7, wobei der Stabilisator ausgewählt ist aus 1-Oxy-2,2,6,6-tetramethylpiperidin (TEMPO) und 4-Hydroxy-1-oxy-2,2,6,6-tetramethylpiperidin (4-OH-TEMPO).

9. Zusammensetzung nach einem der Ansprüche 1-8 umfassend
- etwa 10-35 Gew.-% an dem polymerisierbaren monomeren (Meth)acrylat,
- 0,01-5,0 Gew.-% an der sterisch gehinderten Aminoxylradikalverbindung,
- etwa 10-35 Gew.-% an dem Harnstoff-Aldehyd-Harz und
- etwa 4-80 Gew.-% an dem Pigment,
jeweils bezogen auf das Gesamtgewicht der Zusammensetzung.

10. Verfahren zum Stabilisieren einer pigmentierten Zusammensetzung auf (Meth)acrylatbasis, umfassend die Schritte von
- Bereitstellen wenigstens eines polymerisierbaren monomeren (Meth)acrylats,
- Zugeben eines Harnstoff-Aldehyd-Harzes,
- Zugeben von 0,05 bis 5,0 Gew.-% an einer sterisch gehinderten Aminoxylradikalverbindung, bezogen auf das Gesamtgewicht der Zusammensetzung, und
- Dispergieren eines Pigments in dem erhaltenen Gemisch und gegebenenfalls
- Zugeben weiterer Zusatzstoffe.

11. Verwendung von sterisch gehinderten Aminoxylradikalverbindungen zur Stabilisierung einer pigmentierten Zusammensetzung auf auf der Grundlage wenigstens eines polymerisierbaren monomeren (Meth)acrylats in Gegenwart eines Harnstoff-Aldehyd-Harzes.

## Revendications

1. Composition pigmentée, stable au stockage, à base de (méth)acrylate, comprenant :
- au moins un (méth)acrylate monomérique polymérisable,
- au moins un pigment,
- au moins un stabilisant choisi parmi des composés de type radical aminoxyle stériquement encombré, et
- au moins une résine urée-aldéhyde.

2. Composition selon la revendication 1, dans laquelle l'au moins une résine urée-aldéhyde est un produit de polycondensation urée-formaldéhyde.

3. Composition selon la revendication 1 ou 2, dans laquelle le (méth)acrylate polymérisable est choisi parmi les méthacrylates contenant un à quatre groupements (méth)acrylate dans la molécule, et est de préférence le diméthacrylate de triéthylèneglycol (TEGDMA).

4. Composition selon l'une quelconque des revendications 1 à 3, dans laquelle le pigment est choisi parmi les pigments inorganiques, les pigments organiques et les mélanges correspondants.

5. Composition selon l'une quelconque des revendications 1 à 4, dans laquelle le pigment est choisi parmi la baryte, le dioxyde de titane, l'oxyde de chrome (III), l'oxyde de fer (III), la phtalocyanine de cuivre (II), le noir de carbone, le vanadate de bismuth, le Naphthol AS, et les mélanges correspondants.

6. Composition selon l'une quelconque des revendications 1 à 5, dans laquelle le stabilisant est choisi parmi des composés ayant les formules (I) ou (II) suivantes : 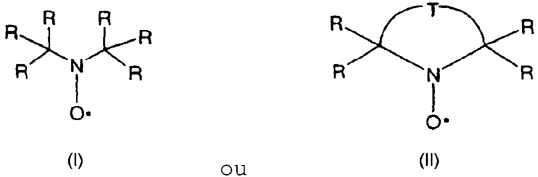 dans laquelle R est alkyle et T est un groupe requis pour former un cycle aliphatique à 5 ou 6 chaînons.

7. Composition selon la revendication 6, dans laquelle R est alkyle en C₁₋₄, de préférence R est méthyle et le stabilisant est un composé de formule (II).

8. Composition selon l'une quelconque des revendications 1 à 7, dans laquelle le stabilisant est choisi parmi la 1-oxy-2,2,6,6-tétraméthylpipéridine (TEMPO) et la 4-hydroxy-1-oxy-2,2,6,6-tétraméthylpipéridine (4-OH-TEMPO).

9. Composition selon l'une quelconque des revendications 1 à 8, comprenant
- environ 10 - 35 % en poids du (méth)acrylate monomérique polymérisable,
- 0,01 - 5,0 % en poids du composé de type radical aminoxyle stériquement encombré,
- environ 10 - 35 % en poids de la résine urée-aldéhyde, et
- environ 4 - 80 % en poids du pigment,
dans chaque cas par rapport au poids total de la composition.

10. Procédé de stabilisation d'une composition pigmentée à base de (méth)acrylate comprenant les étapes de
- fourniture d'au moins un (méth)acrylate monomérique polymérisable,
- ajout d'une résine urée-aldéhyde,
- ajout de 0,05 à 5,0 % en poids d'un composé de type radical aminoxyle stériquement encombré, par rapport au poids total de la composition, et
- dispersion d'un pigment dans le mélange obtenu, et éventuellement
- ajout d'autres additifs.

11. Utilisation de composés de type radical aminoxyle stériquement encombré pour la stabilisation d'une composition pigmentée à base d'au moins un (méth)acrylate monomérique polymérisable en présence d'une résine urée-aldéhyde.
